# FASCICULE DE BREVET EUROPEEN

(11) **EP 2 345 385 B1**
(45) Date de publication et mention de la délivrance du brevet: **05.08.2015**
(21) Numéro de dépôt: 10150741.6
(22) Date de dépôt: 14.01.2010
(51) Int. Cl.: A61C 1/08, A61C 1/10

(54) **Dispositif de déflexion centrifuge pour pièce à main chirurgicale ou dentaire permettant d'évacuer les corps étrangers**
Vorrichtung zur Zentrifugalablenkung für chirurgisches oder zahntechnisches Handstück, das die Entfernung von Fremdkörpern ermöglicht
Centrifugal deflection device for a surgical or dental handpiece for evacuating foreign bodies

(43) Date de publication de la demande: 20.07.2011
(60) Demande divisionnaire: 15162720.5
(73) Titulaire: Bien-Air Holding SA, 2500 Bienne 6 (CH)
(72) Inventeur: Tosetti, Marc, 2016 Cortaillod (CH); Mikic, Nicola, 2300 La Chaux-de-Fonds (CH); Maître, Luc, 2885 Epauvilliers (CH)
(74) Mandataire: Ravenel, Thierry Gérard Louis

(56) Documents cités:
- EP-A2- 1 025 809
- US-A- 3 426 429
- US-A- 4 369 034
- US-A- 5 676 542
- US-A- 5 823 774

## Description

La présente invention concerne un dispositif de déflexion centrifuge destiné à équiper une pièce à main chirurgicale ou dentaire pour permettre d'évacuer les corps étrangers résultant d'une opération. Plus précisément, la présente invention concerne un tel dispositif comprenant une bague permettant d'éviter que les corps étrangers résultant d'une opération ne pénètrent dans la pièce à main équipée de cette bague.

Une opération telle que l'extraction d'une dent de sagesse produit inévitablement des déchets tels que des fragments d'os ou de dent, du sang ou bien encore des sécrétions salivaires. Ces déchets doivent être impérativement éliminés pour laisser le champ opératoire propre afin que le praticien puisse jouir d'une bonne vision du travail qu'il est en train d'effectuer. II faut également éviter que ces déchets ne pénètrent dans la pièce à main car ils risqueraient d'endommager l'instrument ainsi que de le contaminer.

Un dispositif pour éviter que des corps étrangers ne pénètrent dans la zone arrière d'une pièce à main dentaire est connu par la demande de brevet européen EP 0 471 916 A1. Cette pièce à main comprend un corps, une section de maintien et un nez. Le nez comprend un élément principal et une coiffe montée de manière amovible, par exemple par vissage, sur l'élément principal du nez. La coiffe est munie de quatre ouvertures d'évacuation radiales angulairement équidistantes. Un manchon pour recevoir et immobiliser un outil dentaire en coopération avec un arbre moteur est monté radialement sur l'extrémité la plus avant de l'arbre moteur. Un capuchon d'extrémité formant un élément rotatif additionnel est monté par vissage sur la périphérie extérieure du manchon. Le capuchon d'extrémité a une collerette intérieure en contact avec l'outil dentaire et une collerette extérieure s'étendant radialement vers l'extérieur. Une chambre annulaire communiquant à une extrémité avec une ouverture d'insertion d'un outil dentaire et à une autre extrémité avec la face avant d'un roulement situé dans la zone arrière de l'instrument est délimitée entre la périphérie extérieure du capuchon d'extrémité et la coiffe.

Le fonctionnement du dispositif pour éviter que des corps étrangers ne pénètrent dans la pièce à main brièvement décrit ci-dessus est le suivant. Lorsque l'arbre moteur tourne, le manchon et le capuchon d'extrémité tournent ensemble, ce qui induit un flux d'air autour de ces éléments. Etant donné que le rayon de rotation du capuchon d'extrémité est plus grand que celui du manchon, la vitesse circonférentielle de ce capuchon d'extrémité est plus élevée que celle du manchon. Surtout, le rayon de rotation de la collerette extérieure est le plus grand et, par conséquent, la vitesse du flux d'air autour de la périphérie extérieure de la collerette extérieure est la plus élevée de sorte que la pression d'air autour de la collerette extérieure est plus basse au voisinage de la partie la plus avant de la pièce à main. II se crée donc un gradient de pression qui va en diminuant depuis l'ouverture d'insertion de l'outil dentaire vers l'intérieur de la pièce à main. Durant l'opération, des corps étrangers tels que des débris de la dent en cours de soin pénètrent dans la pièce à main par l'ouverture d'insertion de l'outil dentaire et sont aspirés sous l'effet du gradient de pression à l'intérieur de la pièce à main. Ces débris circulent dans la chambre annulaire dans laquelle la pression est plus faible jusqu'à ce qu'ils atteignent la collerette extérieure où la pression est la plus faible. Les débris sont alors expulsés vers l'extérieur à travers les ouvertures d'évacuation sous l'effet de la force centrifuge du capuchon d'extrémité. De cette façon, les corps étrangers sont empêchés de pénétrer dans la zone arrière de l'instrument.

On comprend que, dans le cas du dispositif décrit dans la demande de brevet européen EP 0 471 916 A1 susmentionnée, la pression du flux d'air diminue plus ce flux d'air pénètre dans la pièce à main. Il semble donc, d'après ce qui précède, que la face avant du roulement situé dans la zone arrière de la pièce à main soit convenablement protégée par la collerette extérieure du capuchon d'extrémité qui défléchit les corps étrangers en direction des ouvertures d'évacuation et constitue un obstacle à l'avancement de ces corps étrangers en direction de la face avant du roulement. Néanmoins, le dispositif décrit ci-dessus ne permet pas totalement d'empêcher les débris de pénétrer dans la pièce à main. En effet, les débris pénètrent dans la pièce à main par l'ouverture d'insertion de l'outil dentaire et circulent dans la chambre annulaire délimitée entre la coiffe et la périphérie extérieure du capuchon d'extrémité. Les débris souillent donc inévitablement ces éléments et peuvent même atteindre l'arbre moteur et altérer le fonctionnement de la pièce à main. Par conséquent, entre deux patients successifs, il faut démonter tout le nez de la pièce à main, à savoir la coiffe, le capuchon d'extrémité et le manchon pour pouvoir nettoyer ces éléments et procéder à une stérilisation complète de la pièce à main, ce qui est délicat et prend du temps.

Des pièces à main à usage dentaire ou chirurgical sont connues par les documents EP 1 025 809 A2 sur lequel est basé la forme en deux parties de la revendication 1, US 5,676,542 A et US 3,426,429 A. Aucun de ces documents ne décrit un dispositif pour éviter la pénétration de corps étrangers dans les pièces à main comprenant une bague couplée en rotation avec l'arbre d'entraînement de la pièce à main et présentant un profil tronconique dont le diamètre va en diminuant de l'avant vers l'arrière de la pièce à main.

La présente invention a pour but de pallier les inconvénients susmentionnés ainsi que d'autres encore en procurant un dispositif de déflexion centrifuge pour pièce à main chirurgicale ou dentaire permettant réellement d'empêcher l'entrée de tout corps étranger à l'intérieur de la pièce à main.

A cet effet, la présente invention concerne un dispositif de déflexion centrifuge selon la revendication 1 annexée au présent brevet.

Grâce à ces caractéristiques, la présente invention procure un dispositif de déflexion centrifuge comprenant une bague qui, en étant entraînée soit directement par l'arbre moteur de la pièce à main, soit par la tige de l'outil, induit un flux d'air dans une chambre d'éjection située entre la bague et une douille montée fixe sur l'extrémité avant du corps de la pièce à main. D'autre part, étant donné que le premier diamètre de la bague au niveau de la sortie de la chambre d'éjection est supérieur au deuxième diamètre de la bague au niveau de l'entrée de la chambre d'éjection, la vitesse circonférentielle de la bague au niveau de la sortie de la chambre d'éjection est plus élevée que la vitesse circonférentielle de la bague au niveau de l'entrée de la chambre d'éjection. Par conséquent, la vitesse du flux d'air autour de la périphérie extérieure de la partie de la bague de plus grand diamètre est la plus élevée de sorte que la pression d'air autour de la partie de la bague de plus grand diamètre est plus basse que la pression au niveau de la partie de la bague de plus petit diamètre. Il se crée donc dans la chambre d'éjection un gradient de pression qui va en diminuant depuis l'intérieur de la pièce à main vers l'extérieur de celle-ci. Sous l'effet de ce gradient de pression, un flux d'air est expulsé de la pièce à main et permet d'empêcher les débris provenant du champ opératoire de pénétrer dans l'instrument. Contrairement à l'art antérieur où les débris sont aspirés à l'intérieur de la pièce à main, la présente invention enseigne de prévenir la pénétration de ces débris à l'intérieur de la pièce à main au moyen d'un flux d'air qui sort de la pièce à main. Les risques que des débris pénètrent dans la pièce à main et grippent son mécanisme sont évités. D'autre part, l'entretien et la stérilisation d'une pièce à main équipée d'une bague selon l'invention sont grandement facilités.

Dans le cas où la bague et la douille sont amovibles, cela permet avantageusement de porter les pièces à main existantes à un standard plus élevé en leur adjoignant une fonction supplémentaire sans que cela nécessite une quelconque modification de ces pièces à main.

Le profil de la chambre d'éjection forme avec l'axe de symétrie de l'outil un angle non nul qui s'étend de part et d'autre d'une plage centrée autour de la valeur 90° qui correspond à une position dans laquelle le profil de la chambre d'éjection est perpendiculaire à l'axe de symétrie de l'outil.

Les parois en regard de la bague rotative et de la douille fixe s'étendent sensiblement parallèlement entre elles.

D'autres caractéristiques et avantages de la présente invention ressortiront plus clairement de la description détaillée qui suit d'un mode de réalisation du dispositif de déflexion centrifuge selon l'invention, cet exemple étant donné à titre purement illustratif et non limitatif seulement en liaison avec le dessin annexé sur lequel :
- la figure 1 est une vue en coupe longitudinale d'une pièce à main équipée d'un dispositif de déflexion centrifuge ;
- la figure 2 est une vue en perspective de la douille qui délimite avec la bague de déflexion centrifuge une chambre d'éjection de forme sensiblement annulaire à l'intérieur de laquelle se crée un gradient de pression ;
- la figure 3 est une vue en coupe longitudinale de la douille de la figure 2 ;
- la figure 4 est une vue en perspective de la bague de déflexion centrifuge ;
- la figure 5 est une vue à plus grande échelle de la partie avant de la pièce à main illustrée à la figure 1 ;
- la figure 6 est une vue analogue à celle de la figure 5 sur laquelle est visible une bague destinée à être immobilisée par chassage sur la tige de l'outil ;
- la figure 7 est une vue en coupe longitudinale d'une pièce à main équipée du dispositif de déflexion selon l'invention ;
- la figure 8 est une représentation schématique d'une bague montée par chassage sur la tige de l'outil, cette bague présentant un angle de conicité qui augmente de l'extrémité avant de la pièce à main vers l'extrémité arrière de la pièce à main, et
- la figure 9 est une représentation schématique d'une bague montée par chassage sur la tige de l'outil, cette bague s'étendant perpendiculairement à l'axe de symétrie longitudinale de la tige de l'outil.

La présente invention procède de l'idée générale inventive qui consiste à équiper une pièce à main chirurgicale ou dentaire d'un dispositif de déflexion centrifuge comprenant une bague ayant pour fonction d'empêcher tout corps étranger de pénétrer dans la pièce à main. A cet effet, la bague qui tourne en même temps que l'arbre moteur de la pièce à main crée à l'intérieur de la pièce à main un gradient de pression qui va en décroissant de l'intérieur vers l'extérieur de la pièce à main. Ce gradient de pression induit un flux d'air qui s'échappe de la pièce à main par l'avant de celle-ci. Ce flux d'air permet de chasser les corps étrangers (débris de dent ou d'os, sang, sécrétions salivaires) provenant de la zone de travail. En refoulant les corps étrangers et en les empêchant de ce fait de pénétrer dans la pièce à main, on évite les risques de détériorer l'instrument et on facilite considérablement les opérations de nettoyage et de stérilisation.

Dans ce qui suit, l'orientation spatiale des différents éléments du dispositif de déflexion centrifuge selon l'invention sera repérée par rapport aux extrémités avant et arrière de la pièce à main sachant que l'extrémité avant de la pièce à main est située du côté de l'ouverture d'insertion de la tige de l'outil et que l'extrémité arrière de la pièce à main est située du côté par lequel l'utilisateur tient la pièce à main en main.

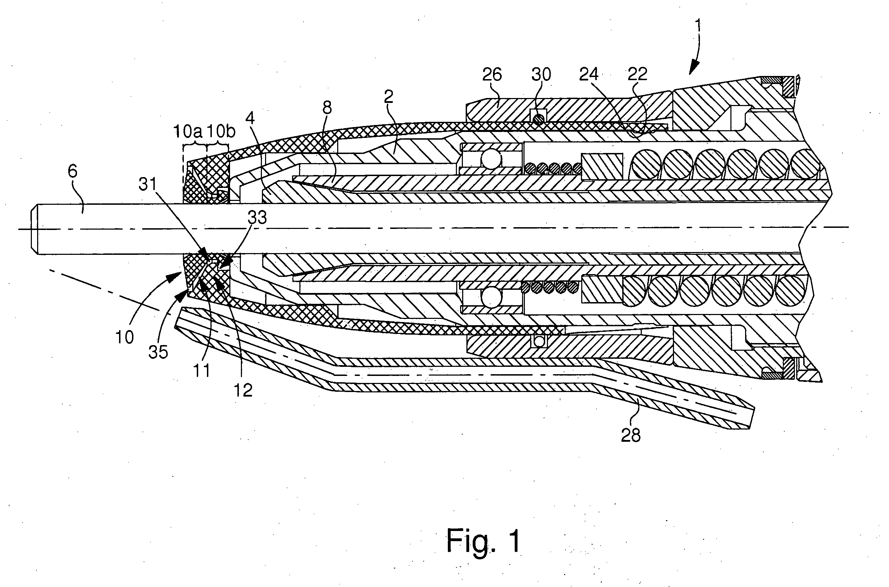

La figure 1 est une vue partielle en coupe longitudinale d'une pièce à main équipée d'un dispositif de déflexion des corps étrangers. Désignée dans son ensemble par la référence numérique générale 1, cette pièce à main comprend notamment, logée à l'intérieur d'un corps 2, une pince 4 pour le couplage rigide entre une tige 6 d'un outil et un arbre moteur 8 de la pièce à main 1.

Le dispositif de déflexion comporte une bague 10 qui est une pièce de révolution et qui comprend de l'extrémité avant vers l'extrémité arrière de la pièce à main 1 un tronçon actif avant 10a coiffé par une douille 12 avec laquelle le tronçon actif avant 10a délimite une chambre d'éjection 11 de forme sensiblement annulaire. La bague 10 comprend d'autre part un tronçon arrière 10b utile à la fois pour son blocage axial et pour son montage à friction sur la tige 6 de l'outil. La bague 10 tourne donc en même temps et à la même vitesse que la tige 6 de l'outil.

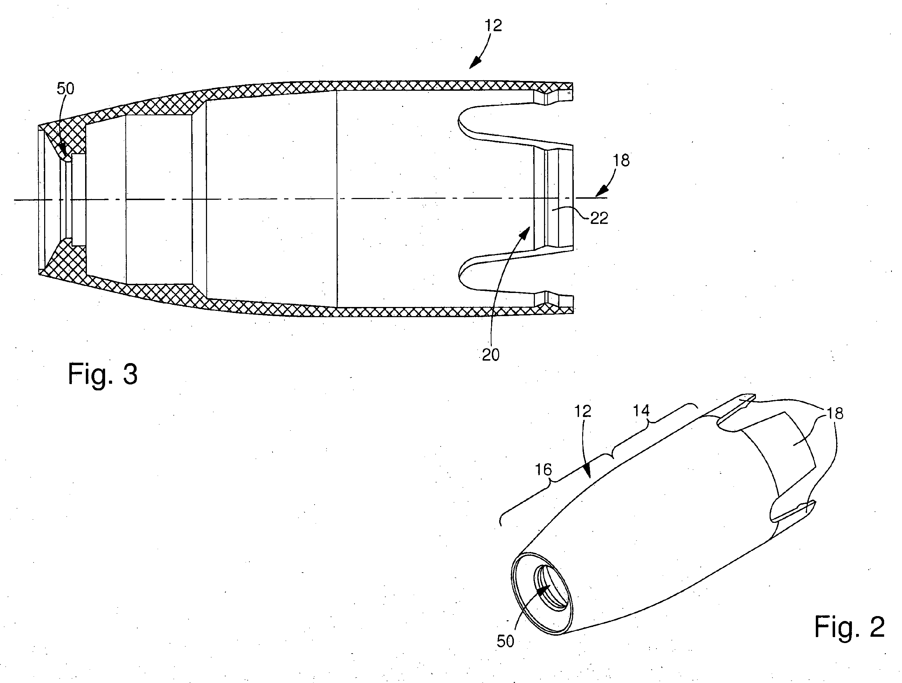

Comme on le verra plus en détail ci-après, la bague 10 est libre en rotation par rapport à la douille 12 mais bloquée axialement par cette douille 12. La douille 12 a la forme d'une ogive avec une portion 14 de forme cylindrique prolongée vers l'extrémité avant de la pièce à main 1 par une portion 16 de forme sensiblement conique (voir figure 2). La douille 12 est immobilisée axialement sur le corps 2 de la pièce à main 1. A cet effet, la douille 12 est prolongée vers l'extrémité arrière de la pièce à main 1 par une pluralité de bras 18, quatre dans l'exemple représenté, qui s'étendent tangentiellement au corps 2 de la pièce à main 1 et qui présentent, sur leur face 20 en regard du corps 2 de la pièce à main 1, des bourrelets 22 qui viennent en prise dans une rainure radiale 24 en regard prévue sur la face extérieure du corps 2 de la pièce à main 1 (voir figures 1 et 3).

Comme on peut le constater à l'examen de la figure 1, la douille 12 est disposée concentriquement entre le corps 2 de la pièce à main 1 et un anneau extérieur 26 qui porte un conduit 28 en acier inoxydable. Ce conduit 28 est destiné à être raccordé, via un tuyau flexible (non représenté), à une source de sérum physiologique utilisé pour lubrifier et refroidir la zone de travail de l'outil. L'anneau extérieur 26 est immobilisé sur la douille 12 au moyen d'un fil ressort 30.

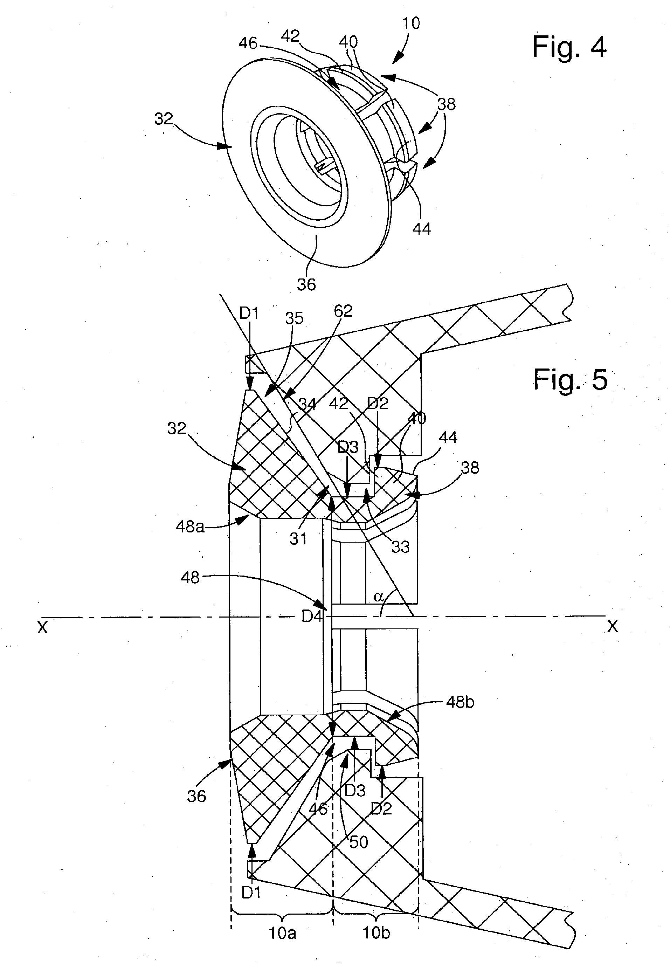

La chambre d'éjection 11 présente (voir figure 5) une entrée 31 en communication avec une zone arrière 33 de la pièce à main 1 et une sortie 35 en communication avec l'environnement extérieur. Le tronçon actif avant 10a de la bague 10 présente, au niveau de la sortie 35 de la chambre d'éjection 11, un premier diamètre désigné par D1 et est relié au tronçon arrière 10b de diamètre D2 par un tronçon intermédiaire dont le plus grand diamètre est désigné par D3. Plus précisément, la bague 10 comprend une collerette 32 centrée sur la tige 6 de l'outil et dont le diamètre se réduit en direction de l'extrémité arrière de la pièce à main 1. Cette collerette 32 est de forme conique avec une portion tronconique 34 dont le deuxième diamètre D4 inférieur au premier diamètre D1 est situé au niveau de l'entrée 31 de la chambre d'éjection 11 et est égal au diamètre D3 du tronçon intermédiaire. Par ailleurs, la collerette 32 présente, du côté de l'extrémité avant de la pièce à main 1, une surface annulaire 36.

Les parois en regard de la bague rotative 10 et de la douille fixe 12 s'étendent sensiblement parallèlement entre elles à une distance faible par rapport à la différence entre le premier diamètre D1 et le deuxième diamètre D4 de la collerette conique 32 de manière à ce que la chambre d'éjection 11 présente une largeur sensiblement constante. On remarquera également que le tronçon actif 10a de la collerette 32 s'étend jusqu'au niveau de l'extrémité avant de la douille fixe 12.

La collerette 32 est prolongée en direction de l'extrémité arrière de la pièce à main 1 par une pluralité de bras flexibles 38, six dans le cas présent, qui s'étendent tangentiellement autour de la tige 6 de l'outil et qui se terminent à leur extrémité libre par un épaulement 40 (voir figure 4). L'un des rôles de ces bras flexibles 38 est de permettre le montage à friction de la bague 10 sur la tige 6 de l'outil. En effet, le diamètre intérieur de la bague 10 est inférieur au diamètre extérieur de la tige 6 de l'outil. En se déformant élastiquement, les bras 38 permettent donc d'engager la bague 10 sur la tige 6 de l'outil.

Pour son montage sur la tige 6 de l'outil, la bague 10 délimite un trou traversant 48 qui débouche, du côté des extrémités avant et arrière de la pièce à main 1, sur deux ouvertures tronconiques 48a et 48b dont les diamètres augmentent en direction des extrémités de la pièce à main 1.

Le diamètre D1 le plus grand de la collerette 32 est supérieur au diamètre D2 le plus grand des épaulements 40. Ces épaulements 40 présentent, par ailleurs, de l'avant vers l'arrière de la pièce à main 1, un tronçon cylindrique 42 prolongé par une portion tronconique 44 dont le diamètre se réduit en direction de l'extrémité arrière de la pièce à main 1.

Les épaulements 40 délimitent avec la collerette 32 une gorge circulaire 46 dont le diamètre D3 est inférieur au plus petit diamètre des épaulements 40. En effet, le deuxième rôle des bras flexibles 38 est de permettre l'immobilisation axiale de la bague 10 sur la douille 12. A cet effet, les bras flexibles 38 coopèrent avec des moyens pour l'immobilisation axiale de la bague 10 qui, dans un mode de réalisation, se présentent sous la forme d'un épaulement circulaire intérieur 50 prévu dans la douille 12 du côté de l'extrémité avant de la pièce à main 1. Plus précisément, on introduit la bague 10 dans la douille 12 du côté de sa portion 16 en forme de cône. Lorsque les bras 38 viennent, par leurs épaulements 40, buter contre l'épaulement circulaire intérieur 50, ils se déforment élastiquement en s'écartant les uns des autres pour laisser le passage audit épaulement circulaire intérieur 50. Ce mouvement de déformation est facilité par la présence de la portion tronconique 44 dont le diamètre se réduit en direction de l'extrémité arrière de la pièce à main 1 et sur lequel l'épaulement circulaire intérieur 50 glisse. Lorsque l'épaulement circulaire intérieur 50 de la douille 12 a dépassé les épaulements 40 des bras 38, ces derniers retrouvent leur position de repos et l'épaulement circulaire intérieur 50 s'encliquète dans la gorge circulaire 46. La bague 10 est ainsi immobilisée axialement relativement à la douille 12 mais est par contre libre en rotation par rapport à cette douille 12. L'ensemble formé par la douille 12 et la bague 10 est ensuite glissé sur le corps 2 de la pièce à main 1 jusqu'à ce que les bourrelets 22 viennent en prise dans la rainure radiale 24. Finalement, on fait passer la tige 6 de l'outil à travers le trou traversant 48 délimité par la bague 10 jusqu'à ce que la tige 6 se retrouve couplée rigidement avec l'arbre moteur 8 grâce à la pince 4. Ce faisant, la bague 10 se retrouve couplée à friction avec la tige 6 de l'outil, de sorte que lorsque l'arbre moteur 8 de la pièce à main 1 tourne, il entraîne simultanément la tige 6 de l'outil et la bague 10. La bague 10 tourne donc à la même vitesse que la tige 6 de l'outil. On notera que le couplage rigide entre l'arbre moteur 8 de la pièce à main 1 et la tige 6 de l'outil ne fait pas partie de l'invention et que l'homme du métier connaît bien les moyens à utiliser pour un tel couplage. Ces moyens ne seront donc pas décrits ici.

Comme déjà mentionné ci-dessus, la bague 10 est montée sur la douille 12 qui elle-même est montée de manière amovible sur le corps 2 de la pièce à main 1. A cet effet, la douille 12 comprend, du côté de l'extrémité arrière de la pièce à main 1, des moyens pour son accrochage élastique sur le corps 2 de la pièce à main 1 et, du côté de l'extrémité avant de la pièce à main 1, des moyens pour le montage libre en rotation de la bague 10. Les moyens pour l'accrochage élastique de la douille 12 sur le corps 2 de la pièce à main 1 sont constitués par les bras 18 susmentionnés qui viennent par leurs bourrelets 22 en prise dans la rainure radiale 24. Quant aux moyens pour le montage libre en rotation de la bague 10, ceux-ci comprennent l'épaulement circulaire intérieur 50 prévu dans la douille 12 du côté de l'extrémité avant de la pièce à main 1.

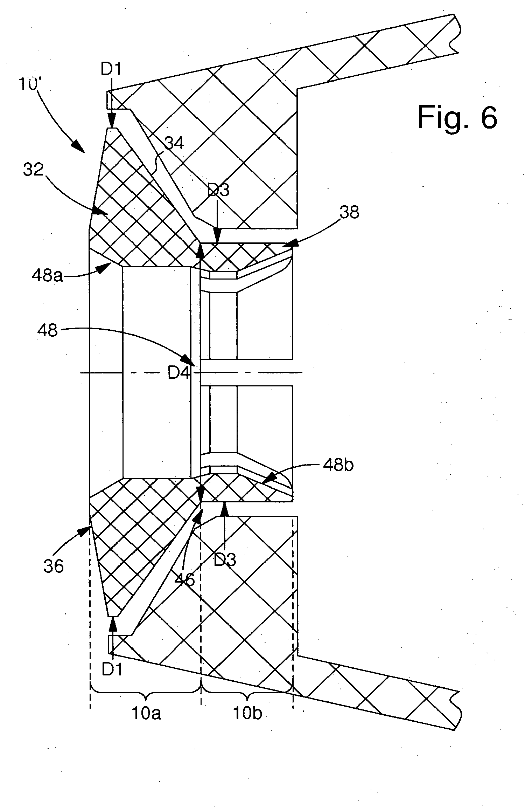

A titre de variante, on a représenté sur la figure 6 une bague 10' analogue à la bague 10 décrite ci-dessus et qui ne s'en distingue qu'en ce que les épaulements 40 ont été omis. Une telle bague 10' est destinée à être montée fixe par chassage sur la tige 6 de l'outil. A ce titre, il suffit d'ajuster le diamètre intérieur de la bague 10' par rapport au diamètre extérieur de la tige 6 de l'outil pour permettre le chassage.

Le fonctionnement du dispositif de déflexion est le suivant. Comme mentionné ci-dessus, la bague 10 est entraînée en rotation à la même vitesse que la tige 6 de l'outil. Il se crée donc un flux d'air dans la chambre d'éjection 11. Or, le diamètre D1 de la partie avant de la collerette 32 au niveau de la sortie 35 de la chambre d'éjection 11 est supérieur au diamètre D4 de la partie arrière de la collerette 32 au niveau de l'entrée 31 de la chambre d'éjection 11. Par conséquent, lorsque la bague 10 tourne avec la tige 6 de l'outil, la vitesse circonférentielle de la collerette 32 est plus élevée dans sa partie avant que dans sa partie arrière. La vitesse du flux d'air autour de la périphérie extérieure de la partie avant de la collerette 32 est ainsi supérieure à la vitesse du flux d'air autour de la périphérie extérieure de la partie arrière de collerette 32, de sorte que la pression d'air autour de la partie avant de la collerette 32 est plus basse que la pression au niveau de la partie arrière de la collerette 32. Il se crée donc à l'intérieur de la chambre d'éjection 11 de la pièce à main 1, entre l'entrée 31 et la sortie 35 de celle-ci, un gradient de pression qui va en diminuant depuis la région des épaulements 40 vers la région de la collerette 32 située au niveau de l'extrémité avant de la pièce à main 1. Sous l'effet de ce gradient de pression, il se crée un flux d'air qui est éjecté de la pièce à main 1 par la sortie 35 de la chambre d'éjection 11 et qui permet de chasser les débris provenant du champ opératoire de l'avant de la pièce à main. Par conséquent, grâce au dispositif de déflection centrifuge selon l'invention, les corps étrangers présents au niveau du champ opératoire ne pénètrent absolument pas dans la pièce à main. Les risques d'endommager le mécanisme de la pièce à main sont évités et les opérations de nettoyage et de stérilisation sont grandement simplifiées.

Les matériaux utilisés pour réaliser la bague 10 et la douille 12 peuvent être du plastique usiné ou injecté, du métal, de la céramique ou bien encore une combinaison de ces différents matériaux. Dans le cas où la douille 12 est réalisée en matériau plastique, on peut charger le plastique avec un pigment thermosensible dont la couleur change en fonction de la température de façon à mettre visuellement en évidence un échauffement de la douille 12. Mis en garde, le praticien attendra le temps nécessaire à la douille pour refroidir et retrouver sa couleur d'origine avant d'introduire à nouveau l'instrument dans la bouche du patient. Les risques de brûler la bouche du patient sont ainsi évités. Dans le cas où la douille 12 est réalisée par exemple en métal ou en céramique, il est possible d'appliquer sur cette douille 12 une couche d'un matériau thermosensible qui jouera le même rôle que le pigment thermosensible noyé dans la matière plastique.

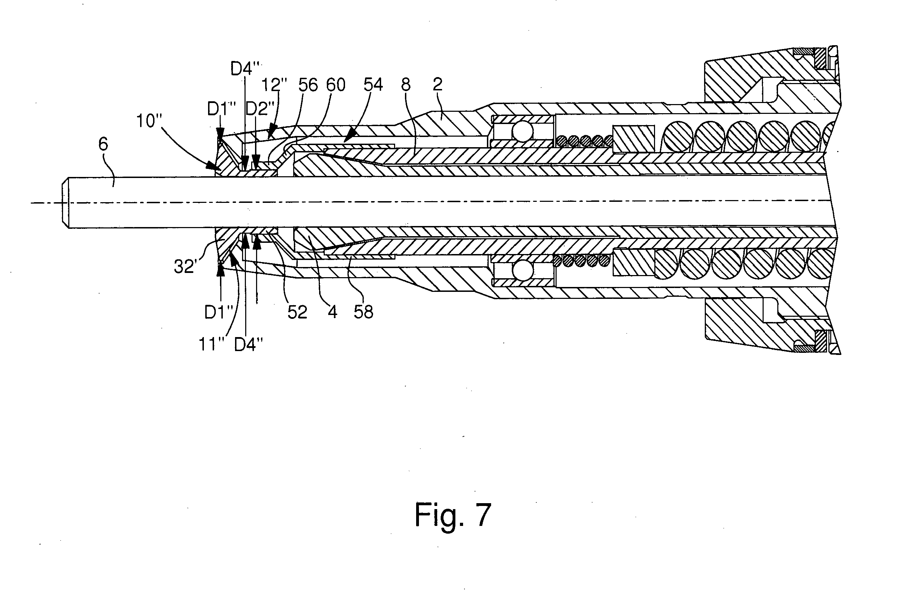

La figure 7 est une vue en coupe longitudinale d'une pièce à main équipée du dispositif de déflexion selon l'invention. Conformément à ce mode de réalisation, la douille 12" est faite d'une seule pièce avec le corps 2 de la pièce à main 1. La douille 12" coiffe une bague 10" montée glissante sur la tige 6 de l'outil. Cette bague 10" comprend, du côté de l'extrémité avant de la pièce à main 1, une collerette 32" de forme générale tronconique dont le diamètre D1" va en diminuant en direction de l'extrémité arrière de la pièce à main 1. Cette collerette 32" est prolongée vers l'arrière de la pièce à main 1 par un manchon 52" dont le diamètre extérieur D2" est inférieur au diamètre D1" le plus grand de la collerette 32". Les parois en regard de la bague 10" et de la douille 12" s'étendent sensiblement parallèlement entre elles et à une distance faible par rapport à la différence entre le diamètre D1" le plus grand et le diamètre D4" le plus petit de la bague conique 10" de manière à délimiter une chambre annulaire 11" présentant une largeur sensiblement constante. Le couplage en rotation de la bague 10" avec l'arbre moteur 8 de la pièce à main 1 est assuré par une pièce d'accouplement 54 qui comprend des portions cylindriques avant 56 et arrière 58 reliées entre elles par une portion tronconique intermédiaire 60. La pièce d'accouplement 54 est engagée sur l'arbre moteur 8 par sa portion cylindrique arrière 58 et sur le manchon 52 de la bague 10" par sa portion cylindrique avant 56. A cet effet, le diamètre intérieur de la portion cylindrique arrière 58 de la pièce d'accouplement 54 est sensiblement égal au diamètre extérieur de l'arbre moteur 8 de manière à permettre le montage, par exemple par chassage ou soudage, de la pièce d'accouplement 54 sur l'arbre moteur 8. Quant au diamètre intérieur de la portion cylindrique avant 56 de la pièce d'accouplement 54, il est inférieur au diamètre extérieur du manchon 52 de la bague 10" pour permettre le couplage rigide entre la bague 10" et l'arbre moteur 8. Selon une variante, la pièce d'accouplement 54 peut être faite d'une pièce avec la bague 10", l'ensemble étant monté par chassage ou soudage sur l'arbre moteur 8 de la pièce à main 1.

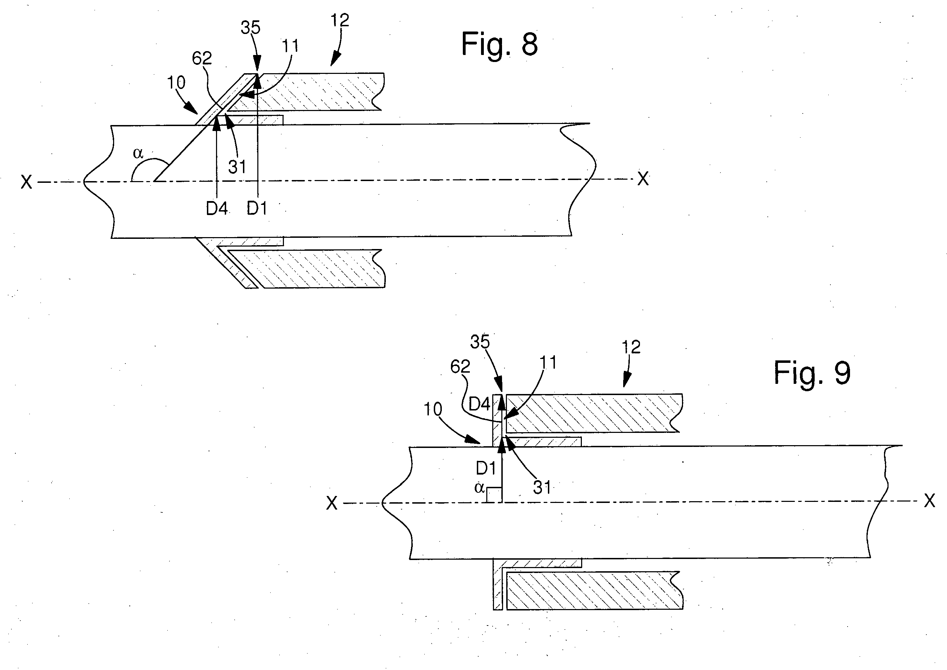

Comme on peut le voir à l'examen de la figure 5, le profil 62 de la chambre d'éjection 11 forme avec l'axe de symétrie X-X de la tige 6 de l'outil un angle α d'environ 45°. Autrement dit, le diamètre de la chambre d'éjection 11 va en diminuant de l'extrémité avant vers l'extrémité arrière de la pièce à main. D'autres valeurs d'angle peuvent néanmoins être envisagées. Ainsi, comme représenté schématiquement à la figure 8, l'angle formé entre le profil 62 de la chambre d'éjection 11 et l'axe de symétrie X-X de la tige 6 de l'outil peut être approximativement de 135° sans que le principe de fonctionnement du dispositif de déflexion centrifuge en soit modifié. En effet, bien que le diamètre du profil 62 de la chambre d'éjection 11 aille en augmentant de l'extrémité avant vers l'extrémité arrière de la pièce à main, le premier diamètre D1 de la bague 10 au niveau de la sortie 35 de la chambre d'éjection 11 est toujours supérieur au deuxième diamètre D4 de la bague 10 au niveau de l'entrée 31 de la chambre d'éjection 11. Enfin, dans un dernier cas illustré à la figure 9, on peut même envisager que le profil 62 de la chambre d'éjection 11 soit perpendiculaire à l'axe de symétrie X-X de la tige 6 de l'outil. Effectivement, même dans ce cas, le premier diamètre D1 de la bague 10 est toujours situé au point de sortie 35 de la chambre d'éjection 11 tandis que le deuxième diamètre D4 de la bague 10 est situé au point d'entrée 31 de la chambre d'éjection 11. Comme le deuxième diamètre D4 est inférieur au premier diamètre D1, la vitesse de l'air au point d'entrée 31 de la chambre d'éjection 11 est inférieure à la vitesse de l'air au point de sortie 35 de cette même chambre d'éjection 11. Par conséquent, la pression de l'air au point d'entrée 31 est supérieure à la pression de l'air au point de sortie 35, de sorte qu'il se crée dans la chambre d'éjection 11 un gradient de pression sous l'effet duquel l'air va être expulsé de la chambre d'éjection en direction de l'extérieur.

## Revendications

1. Dispositif de déflexion centrifuge destiné à équiper une pièce à main chirurgicale ou dentaire (1) pour permettre d'éviter la pénétration de corps étrangers résultant d'une opération, ce dispositif de déflexion centrifuge comprenant une bague (10") couplée en rotation soit directement, soit via une tige (6) d'un outil, avec un arbre moteur (8) de la pièce à main (1), la bague (10") étant coiffée par une douille (12") qui délimite avec la bague (10") une chambre d'éjection (11"), cette chambre d'éjection (11") comprenant une entrée (31) en communication avec une zone arrière (33) de la pièce à main (1) et une sortie (35) en communication avec l'environnement extérieur, la bague (10") présentant un premier diamètre (D1") au niveau de la sortie (35) de la chambre d'éjection (11"), et un deuxième diamètre (D4") au niveau de l'entrée (31) de la chambre d'éjection (11 "), le premier diamètre (D1") de la bague (10") étant supérieur au deuxième diamètre (D4") de la bague (10"), la douille (12") étant faite d'une seule pièce avec le corps (8) de la pièce à main (1), ce dispositif étant **caractérisé en ce que** la bague (10") comprend, du côté de l'extrémité avant de la pièce à main (1), une collerette (32") de forme générale tronconique dont le diamètre (D1") va en diminuant en direction de l'extrémité arrière de la pièce à main (1), cette collerette (32") étant prolongée vers l'arrière de la pièce à main (1) par un manchon (52) dont le diamètre extérieur (D2") est inférieur au diamètre (D1") le plus grand de la collerette (32"), le couplage en rotation de la bague (10") avec l'arbre moteur (8) de la pièce à main (1) étant assuré par une pièce d'accouplement (54).

2. Dispositif selon la revendication 1, **caractérisé en ce que** la pièce d'accouplement (54) comprend des portions cylindriques avant (56) et arrière (58) reliées entre elles par une portion tronconique intermédiaire (60), la pièce d'accouplement (54) étant engagée sur l'arbre moteur (8) par sa portion cylindrique arrière (58) et sur le manchon (52) de la bague (10") par sa portion cylindrique avant (56).

3. Dispositif selon la revendication 2, **caractérisé en ce que** la pièce d'accouplement (54) est faite d'une seule pièce avec la bague (10").

4. Dispositif selon l'une quelconque des revendications 1 à 3, **caractérisé en ce que** les matériaux utilisés pour réaliser la bague (10 ; 10") et la douille (12) sont du plastique usiné ou injecté, du métal ou une céramique ou bien encore une combinaison de ces différents matériaux.

5. Dispositif selon la revendication 4, **caractérisé en ce que** lorsque la douille (12) est réalisée en un matériau plastique, celui-ci est chargé avec un pigment thermosensible dont la couleur change en fonction de la température de façon à mettre visuellement en évidence un échauffement de la douille (12).

6. Dispositif selon la revendication 5, **caractérisé en ce que**, lorsque la douille (12) est réalisée en métal ou en céramique, elle est recouverte d'une couche d'un matériau thermosensible.

## Patentansprüche

1. Zentrifugenablenkvorrichtung, die dazu bestimmt ist, ein chirurgisches oder zahnärztliches Handteil (1) auszustatten, um das Eindringen von Fremdkörpern, die sich aus einer Operation ergeben, zu vermeiden, wobei diese Zentrifugenablenkvorrichtung einen Ring (10") umfasst, der entweder direkt oder über einen Stift (6) eines Werkzeugs mit einer Motorwelle (8) des Handteils (1) rotatorisch gekoppelt ist, wobei der Ring (10") von einer Hülse (12") bedeckt ist, die mit dem Ring (10") eine Auswurfkammer (11") begrenzt, wobei diese Auswurfkammer (11 ") einen Eingang (31), der mit einer hinteren Zone (33) des Handteils (1) kommuniziert, und einen Ausgang (35), der mit der äußeren Umgebung kommuniziert, aufweist, wobei der Ring (10") im Bereich des Ausgangs (35) der Auswurfkammer (11") einen ersten Durchmesser (D1") aufweist und im Bereich des Eingangs (31) der Auswurfkammer (11") einen zweiten Durchmesser (D4") aufweist, wobei der erste Durchmesser (D1 ") des Rings (10") größer als der zweite Durchmesser (D4") des Rings (10") ist, wobei die Hülse (12") einteilig mit dem Körper (8) des Handteils (1) ausgebildet ist, wobei diese Vorrichtung **dadurch gekennzeichnet ist, dass** der Ring (10") auf Seiten des vorderen Endes des Handteils (1) einen im Wesentlichen kegelstumpfförmigen Kranz (32") aufweist, dessen Durchmesser (D1 ") sich in Richtung zu dem hinteren Ende des Handteils (1) verringert, wobei dieser Kranz (32") von dem Handteil (1) nach hinten durch eine Muffe (52) verlängert ist, deren Außendurchmesser (D2") kleiner ist als der größte Durchmesser (D1 ") des Kranzes (32"), wobei die rotatorische Kopplung des Rings (10") mit der Motorwelle (8) des Handteils (1) durch ein Kopplungsteil (54) sichergestellt ist.

2. Vorrichtung nach Anspruch 1, **dadurch gekennzeichnet, dass** das Kopplungsteil (54) vordere und hintere zylindrische Abschnitt (56) umfasst, die durch einen kegelstumpfförmigen Zwischenabschnitt (60) miteinander verbunden sind, wobei das Kopplungsteil (54) an der Motorwelle (8) mittels seines hinteren zylindrischen Abschnitts (58) und an der Muffe (52) des Rings (10") mittels seines vorderen zylindrischen Abschnitts (56) in Eingriff ist.

3. Vorrichtung nach Anspruch 2, **dadurch gekennzeichnet, dass** das Kopplungsteil (54) einteilig mit dem Ring (10") ausgebildet ist.

4. Vorrichtung nach einem der Ansprüche 1 bis 3, **dadurch gekennzeichnet, dass** die Materialien, die für die Herstellung des Rings (10; 10") und der Hülse (12) verwendet werden, bearbeiteter oder gespritzter Kunststoff, Metall oder eine Keramik oder aber eine Kombination aus diesen verschiedenen Materialien sind.

5. Vorrichtung nach Anspruch 4, **dadurch gekennzeichnet, dass** dann, wenn die Hülse (12) aus einem Kunststoff verwirklicht ist, dieser mit einem wärmeempfindlichen Pigment angereichert ist, dessen Farbe sich als Funktion der Temperatur ändert, derart, dass eine Erwärmung der Hülse (12) visuell verdeutlicht wird.

6. Vorrichtung nach Anspruch 5, **dadurch gekennzeichnet, dass** dann, wenn die Hülse (12) aus Metall oder Keramik hergestellt ist, mit einer Schicht aus wärmeempfindlichem Material abgedeckt ist.

## Claims

1. Centrifugal deflection device intended to be fitted to a surgical or dental handpiece (1) for preventing the penetration of foreign matter that results from an operation, said centrifugal deflection device including a ring (10") coupled in rotation, either directly or via a tool shank (6), to a drive shaft (8) of the handpiece (1), the ring (10") being covered by a sleeve (12") which, with the ring (10"), delimits an ejection chamber (11"), said ejection chamber (11 ") including an inlet (31) that communicates with a rear area (33) of the handpiece (1) and an outlet (35) that communicates with the external environment, the ring (10") having a first diameter (D1") at the outlet (35) of the ejection chamber (11 "), and a second diameter (D4") at the inlet (31) of the ejection chamber (11 "), the first diameter (D1") of the ring (10") being larger than the second diameter (D4") of the ring (10"), the sleeve (12") being made in a single piece with the body (2) of the handpiece (1), said device being **characterized in that** the ring (10") includes, on the front end side of the handpiece (1), a flange (32") of generally truncated shape, whose diameter (D1") decreases towards the rear end of the handpiece (1), said flange (32") being extended towards the rear of the handpiece (1) by a sleeve (52), whose external diameter (D2") is smaller than the largest diameter (D1") of the flange (32"), the ring (10") being coupled in rotation to the drive shaft (8) of the handpiece (1) by a coupling part (54).

2. Device according to claim 1, **characterized in that** the coupling part (54) includes front (56) and rear (58) cylindrical portions connected to each other by an intermediate truncated portion (60), the coupling part (54) being engaged on the drive shaft (8) by the rear cylindrical portion (58) thereof and on the sleeve (52) of the ring (10") by the front cylindrical portion (56) thereof.

3. Device according to claim 2, **characterized in that** the coupling part (54) is made in a single piece with the ring (10").

4. Device according to any of claims 1 to 3, **characterized in that** the materials used to make the ring (10; 10") and the sleeve (12) are machined or injected plastic, metal or a ceramic material or even a combination of these different materials.

5. Device according to claim 4, **characterized in that** when the sleeve (12) is made of plastic material, the plastic can be loaded with a heat sensitive pigment whose colour changes with temperature so as to make any heating of the sleeve (12) visually apparent.

6. Device according to claim 5, **characterized in that**, when the sleeve (12) is made of metal or ceramic material, it is coated with a layer of heat sensitive material.
